# EUROPÄISCHE PATENTSCHRIFT

(11) **EP 2 478 199 B1**
(45) Veröffentlichungstag und Bekanntmachung des Hinweises auf die Patenterteilung: **23.08.2017**
(21) Anmeldenummer: 10745604.8
(22) Anmeldetag: 23.08.2010
(51) Int. Cl.: F02D 41/24, F02D 41/40, F02D 41/20

(54) **VERFAHREN UND STEUERGERÄT ZUM BETREIBEN EINES VENTILS**
METHOD AND CONTROL UNIT FOR OPERATING A VALVE
PROCÉDÉ ET APPAREIL DE COMMANDE POUR FAIRE FONCTIONNER UNE SOUPAPE

(30) Priorität: 18.09.2009 DE 102009029590
(43) Veröffentlichungstag der Anmeldung: 25.07.2012
(73) Patentinhaber: Robert Bosch GmbH, 70442 Stuttgart (DE)
(72) Erfinder: BECKER, Thomas, 73730 Esslingen/Zell (DE); FUCHS, Egbert, 70469 Stuttgart-Feuerbach (DE); LANDHAEUSSER, Felix, 73274 Notzingen (DE); KOBER, Ralph, 70839 Gerlingen (DE); RAPP, Holger, 71254 Ditzingen (DE); GANN, Thomas, 71116 Gaertringen (DE)
(86) Internationale Anmeldenummer: PCT/EP2010/062203
(87) Internationale Veröffentlichungsnummer: WO 2011/032804

(56) Entgegenhaltungen:
- EP-A2- 1 443 198
- WO-A1-01/90556
- DE-A1-102005 032 087

## Beschreibung

### Stand der Technik

Die Erfindung betrifft ein Verfahren zum Betreiben eines mittels eines Aktors betätigten Ventils, insbesondere eines Einspritzventils einer Brennkraftmaschine eines Kraftfahrzeugs, bei dem der Aktor mit einem eine gewünschte Öffnungsdauer des Ventils charakterisierenden Ansteuersignal angesteuert wird.

Die Erfindung betrifft darüber hinaus ein Steuergerät zur Durchführung eines derartigen Verfahrens.

Aus der WO 01/90556 A1 ist ein Verfahren zum Betreiben eines mittels eines Aktors betätigten Ventils bekannt, bei dem der Aktor mit einem eine gewünschte Öffnungsdauer des Ventils charakterisierenden Ansteuersignal angesteuert wird. Die gewünschte Öffnungsdauer charakterisierende Ansteuersignal in Abhängigkeit von einer Ventilverzugszeit korrigiert wird. Die Schaltzeiten werden durch unterschiedliche steile Ladeflanken und Entladeflanken kompensiert.

Auch die EP 1443 198 A2 beschreibt ein Verfahren zum Betreiben eines mittels eines Aktors betätigten Ventils, bei dem der Aktor mit einem eine gewünschte Öffnungsdauer des Ventils charakterisierenden Ansteuersignal angesteuert wird.

Auch die DE 10 2005 032 087 A1 zeigt ein Verfahren zum Betreiben eines mittels eines Aktors betätigten Ventils, bei dem der Aktor mit einem eine gewünschte Öffnungsdauer des Ventils charakterisierenden Ansteuersignal angesteuert wird. Bei diesem Verfahren wird die Nadelschließzeitdauer ermittelt und die Ansteuerdauer von dieser Nadelschließzeitdauer vorgegeben.

Aktorbetätigte Ventile der vorstehend genannten Art kommen beispielsweise als Kraftstoffeinspritzventile von Brennkraftmaschinen mit Common-Rail Einspritzsystemen zum Einsatz, wie sie in Kraftfahrzeugen verwendet werden. Solche Kraftstoffeinspritzventile besitzen in einer bevorzugten Ausführungsform ein Steuerventil, welches von dem Aktor angesteuert wird. Dabei bewirkt ein Öffnen des Steuerventils beispielsweise ein Öffnen einer Ventilnadel des Kraftstoffeinspritzventils, wobei der Nadelhub der Ventilnadel bevorzugt einem primär von einem Kraftstoffdruck abhängigen Hub-Zeitverlauf folgt. Ein Schließen des Steuerventils über eine entsprechende Ansteuerung des Aktors bewirkt dementsprechend eine Umkehr der Bewegungsrichtung der Ventilnadel des Einspritzventils und damit die Einleitung des Schließvorgangs. Auch bei dem Schließvorgang folgt die Ventilnadel in ihrer Bewegung einem vorgegebenen Hub-Zeitverlauf, der im Wesentlichen durch den Kraftstoffdruck festgelegt ist. Folglich wird eine Einspritzdauer während der Betätigung des Kraftstoffeinspritzventils im Wesentlichen durch die Öffnungsdauer des Steuerventils bestimmt. Insbesondere bei modernen, druckausgeglichenen Steuerventilen erfolgt eine weitgehende Entdrosselung des Ventilsitzes bereits bei sehr kleinen Hüben, so dass als wirksame Öffnungsdauer des Steuerventils das Zeitintervall zwischen einem Abheben eines Ventilelements des Steuerventils aus seinem Sitz bis zu einem Wiedereintreffen des Ventilelements in seinen Sitz definiert werden kann.

Die tatsächliche Öffnungsdauer des in dem Kraftstoffeinspritzventil enthaltenen Steuerventils ist bei herkömmlichen Systemen jedoch nicht bekannt, sondern lediglich eine Ansteuerdauer, während der der Aktor des Kraftstoffeinspritzventils zur Betätigung des Steuerventils angesteuert wird. Zwischen einem Beginn der Ansteuerung des Aktors und einem tatsächlichen Öffnen des Kraftstoffeinspritzventils und einem Ende der Ansteuerung des Aktors und einem tatsächlichen Schließzeitpunkt des Kraftstoffeinspritzventils ergeben sich in der Regel sogenannte Ventilverzugszeiten, die üblicherweise nicht konstant sind und die bei den herkömmlichen Systemen eine Präzision bei der Kraftstoffzumessung verringern.

Es ist daher Aufgabe der vorliegenden Erfindung, ein Verfahren und ein Steuergerät der eingangs genannten Art dahingehend zu verbessern, dass eine gesteigerte Präzision hinsichtlich der Einspritzung erzielt wird.

Diese Aufgabe wird bei einem Verfahren der eingangs genannten Art erfindungsgemäß dadurch gelöst, dass in Abhängigkeit von Betriebsgrößen der Brennkraftmaschine, eine unkorrigierte Ansteuerdauer ermittelt wird, und dass die unkorrigierte Ansteuerdauer mittels eines Schließverzugszeit-Korrekturwerts korrigiert wird, der in Abhängigkeit einer tatsächlichen Schließverzugszeit ermittelt wird, dass in Abhängigkeit von Betriebsgrößen der Brennkraftmaschine, eine Soll-Schließverzugszeit ermittelt wird, dass ein Schließverzugszeit-Adaptionswert in Abhängigkeit einer Abweichung zwischen der tatsächlichen Schließverzugszeit und der Soll-Schließverzugszeit ermittelt wird, und dass in Abhängigkeit von Betriebsgrößen der Brennkraftmaschine, und von dem Schließverzugszeit-Adaptionswert der Schließverzugszeit-Korrekturwert ermittelt wird.

Durch die erfindungsgemäße Betrachtung der Ventilverzugszeit ist es vorteilhaft möglich, das zur Ansteuerung des Aktors verwendete Ansteuersignal, insbesondere für folgende Ansteuerungen, so zu korrigieren, dass eine tatsächliche Öffnungsdauer des Ventils besser übereinstimmt mit der gewünschten Öffnungsdauer.

Eine besonders vorteilhafte Ausführungsform des erfindungsgemäßen Verfahrens sieht vor, dass das Ansteuersignal in Abhängigkeit von einer, insbesondere messtechnisch und/oder modellbasiert ermittelten, tatsächlichen Schließverzugszeit des Ventils korrigiert wird, die einer Zeitdifferenz zwischen einem Ende der durch das Ansteuersignal definierten Ansteuerdauer und einem tatsächlichen Schließzeitpunkt entspricht. Dadurch kann vorteilhaft auch schwankenden Schließverzugszeiten Rechnung getragen werden, die sich z.B. aufgrund von Alterungseffekten von Ventilkomponenten und veränderlichen Umgebungsbedingungen (Raildruck, Temperatur, Rücklauf-Gegendruck) ergeben.

Sofern das erfindungsgemäß betriebene Einspritzventil ein Steuerventil aufweist, kann im Rahmen des erfindungsgemäßen Verfahrens vorteilhaft auch der Schließzeitpunkt des Steuerventils bei der Bildung der Schließverzugszeit betrachtet werden.

Eine weitere Steigerung der Präzision des erfindungsgemäßen Verfahrens ist vorteilhaft dadurch gegeben, dass ein Prellen einer Ventilnadel des Ventils berücksichtigt wird bei der Ermittlung der tatsächlichen Schließverzugszeit. Unter Kenntnis der den Prellvorgang charakterisierenden Größen (z.B. Öffnungsdauer während Prellen, Anzahl der Prellvorgänge je Ansteuerzyklus) kann beispielsweise die reguläre Schließverzugszeit um einen entsprechenden Faktor erhöht werden.

Analog zur erfindungsgemäßen Berücksichtigung der tatsächlichen Schließverzugszeit kann bei einer weiteren vorteilhaften Ausführungsform des erfindungsgemäßen Betriebsverfahrens das Ansteuersignal auch in Abhängigkeit von einer tatsächlichen Öffnungsverzugszeit des Ventils korrigiert werden, die einer Zeitdifferenz zwischen einem Beginn der durch das Ansteuersignal definierten Ansteuerdauer und einem tatsächlichen Öffnungszeitpunkt entspricht. Auch die tatsächliche Öffnungsverzugszeit kann entweder messtechnisch und/oder modellbasiert ermittelt werden, so dass vorteilhaft auch schwankende Öffnungsverzugszeiten berücksichtigt werden können.

Sofern das erfindungsgemäß betriebene Einspritzventil ein Steuerventil aufweist, kann im Rahmen des erfindungsgemäßen Verfahrens vorteilhaft auch der Öffnungszeitpunkt des Steuerventils bei der Bildung der Öffnungsverzugszeit betrachtet werden.

Eine entsprechende Korrektur einer zunächst unkorrigierten Ansteuerdauer mittels eines Korrekturwerts für die Öffnungsverzugszeit ist ebenfalls möglich.

Als eine weitere Lösung der Aufgabe der vorliegenden Erfindung ist ein Steuergerät gemäß Patentanspruch 10 angegeben.

Von besonderer Bedeutung ist die Realisierung der Erfindung in Form eines Computerprogramms, das auf einer Recheneinheit eines Steuergeräts ausführbar ist.

Vorteilhafte Ausgestaltungen der Erfindung sind Gegenstand der Unteransprüche.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von deren Formulierung bzw. Darstellung in der Beschreibung beziehungsweise Zeichnung.

In der Zeichnung zeigt:
- Figur 1a, 1b, 1c: verschiedene Betriebszustände eines erfindungsgemäß betriebenen Einspritzventils,
- Figur 2: einen zeitlichen Verlauf von Betriebsgrößen des Einspritzventils aus Figur 1a bis 1c,
- Figur 3: ein vereinfachtes Funktionsdiagramm eines Betriebsverfahrens aus dem Stand der Technik,
- Figur 4a, 4b, 4c: jeweils unterschiedliche Ausführungsformen eines erfindungsgemäßen Betriebsverfahrens,
- Figur 5a, 5b: weitere Ausführungsformen des erfindungsgemäßen Betriebsverfahrens, und
- Figur 6: ein Zustandsdiagramm einer weiteren Ausführungsform des erfindungsgemäßen Betriebsverfahrens.

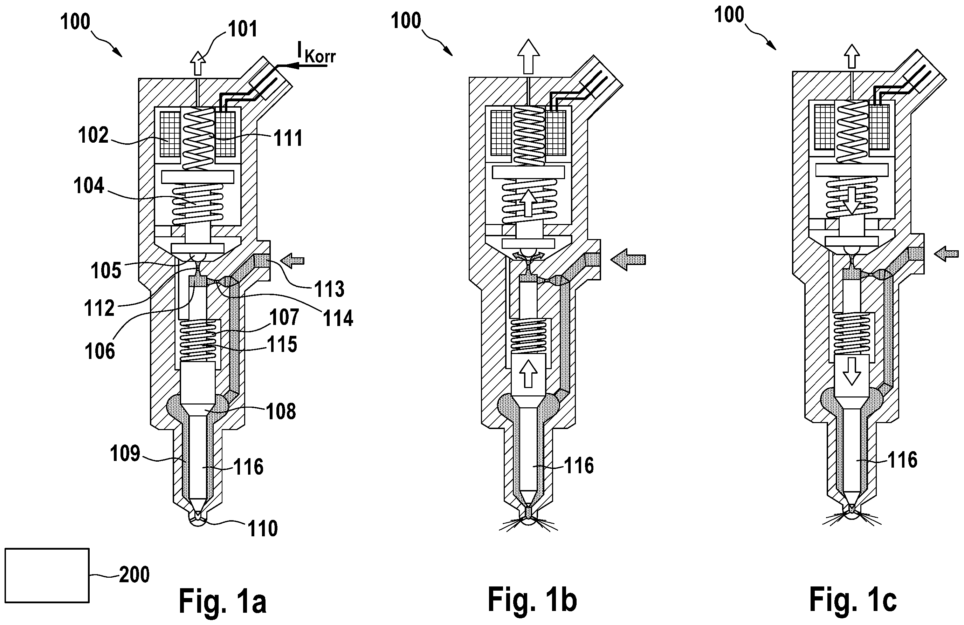

Figur 1a bis 1c zeigt eine Ausführungsform eines für die Kraftstoffeinspritzung vorgesehenen Einspritzventils 100 eines Common-Rail-Kraftstoffeinspritzsystems einer Brennkraftmaschine in verschiedenen Betriebszuständen eines Einspritzzyklus.

Figur 1a zeigt das Einspritzventil 100 in seinem Ruhezustand, in dem es nicht durch das ihm zugeordnete Steuergerät 200 angesteuert wird. Eine Magnetventilfeder 111 presst hierbei eine Ventilkugel 105 in einen hierfür vorgesehenen Sitz der Ablaufdrossel 112, so dass sich in dem Ventilsteuerraum 106 ein dem Raildruck entsprechender Kraftstoffdruck aufbauen kann, wie er auch im Bereich des Hochdruckanschlusses 113 herrscht.

Der Raildruck steht auch in dem Kammervolumen 109 an, das die Ventilnadel 116 des Einspritzventils 100 umgibt. Die durch den Raildruck auf die Stirnfläche des Steuerkolbens 115 aufgebrachten Kräfte sowie die Kraft der Düsenfeder 107 halten die Ventilnadel 116 gegen eine öffnende Kraft, die an der Druckschulter 108 der Ventilnadel 116 angreift, geschlossen.

Figur 1b zeigt das Einspritzventil 100 in seinem geöffneten Zustand, den es unter Ansteuerung durch das Steuergerät 200 auf die folgende Weise ausgehend von dem in Figur 1a abgebildeten Ruhezustand einnimmt: Der vorliegend durch die in Figur 1a bezeichnete Magnetspule 102 und den mit der Magnetspule 102 zusammenwirkenden Magnetanker 104 gebildete elektromagnetische Aktor wird durch das Steuergerät 200 mit einem ein Ansteuersignal bildenden erfindungsgemäß korrigierten Ansteuerstrom Ikorr beaufschlagt, um ein schnelles Öffnen des als Steuerventil arbeitenden Magnetventils 104, 105, 112 zu bewirken. Die Magnetkraft des elektromagnetischen Aktors 102, 104 übersteigt hierbei die Federkraft der Ventilfeder 111 (Figur 1a), so dass der Magnetanker 104 die Ventilkugel 105 von ihrem Ventilsitz abhebt und hiermit die Ablaufdrossel 112 öffnet.

Mit dem Öffnen der Ablaufdrossel 112 kann nun Kraftstoff aus dem Ventilsteuerraum 106 in den gemäß Figur 1b darüber liegenden Hohlraum, vgl. die Pfeile, und über einen Kraftstoffrücklauf 101 zurück zu einem nicht abgebildeten Kraftstoffbehälter abfließen. Die Zulaufdrossel 114 verhindert einen vollständigen Druckausgleich zwischen dem im Bereich des Hochdruckanschlusses 113 anliegenden Raildruck und dem Druck in dem Ventilsteuerraum 106, so dass der Druck in dem Ventilsteuerraum 106 sinkt. Dies führt dazu, dass der Druck in dem Ventilsteuerraum 106 kleiner wird als der Druck in dem Kammervolumen 109, der nach wie vor dem Raildruck entspricht. Der verringerte Druck in dem Ventilsteuerraum 106 bewirkt eine dementsprechend verringerte Kraft auf den Steuerkolben 115 und führt somit zum Öffnen des Einspritzventils 100, das heißt zu dem Abheben der Ventilnadel 116 aus ihrem Ventilnadelsitz im Bereich der Spritzlöcher 110. Dieser Betriebszustand ist in Figur 1b veranschaulicht.

Anschließend, das heißt nach dem Abheben aus dem Ventilnadelsitz, vollführt die Ventilnadel 116 primär unter Einwirkung der hydraulischen Kräfte in dem Kammervolumen 109 und in dem Ventilsteuerraum 106 eine im Wesentlichen ballistische Trajektorie.

Sobald der elektromagnetische Aktor 102, 104 (Figur 1a) nicht mehr durch das Steuergerät 200 angesteuert wird, drückt die Ventilfeder 111 den Magnetanker 104 wie in Figur 1 c abgebildet nach unten, so dass die Ventilkugel 105 daraufhin die Ablaufdrossel 112 verschließt. Durch den weiterhin über die Zulaufdrossel 114 in den Ventilsteuerraum 106 nachfließenden Kraftstoff wird die Ventilnadel 116 nun nach unten bewegt, wobei sie einer im Wesentlichen ballistischen Trajektorie folgt, bis sie ihre Schließlage wider erreicht. Dieser Zustand ist in Figur 1c dargestellt.

Die Kraftstoffeinspritzung ist beendet, sobald die Ventilnadel 116 ihren Ventilnadelsitz im Bereich der Spritzlöcher 110 erreicht und diese verschließt.

Insgesamt wird die Einspritzdauer der durch das Einspritzventil 100 bewirkten Kraftstoffeinspritzung wesentlich durch die Öffnungsdauer des Steuerventils 104, 105, 112 bestimmt.

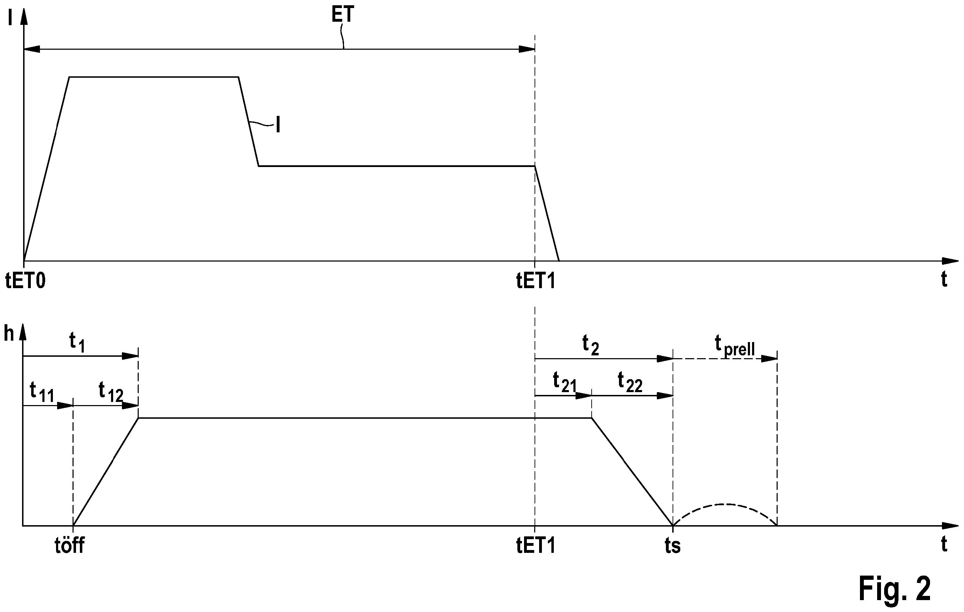

Figur 2 zeigt schematisch einen zeitlichen Verlauf der Betriebsgrößen Ansteuerstrom I, Ventilhub h der Ventilkugel 105 (Figur 1a) des Steuerventils, wie er sich während eines Ansteuerzyklus im Rahmen einer Kraftstoffeinspritzung ergibt.

Zunächst wird zu dem Zeitpunkt tET0 der elektromagnetische Aktor 102, 104 (Figur 1a) des Einspritzventils 100 bestromt, um ein Abheben der Ventilkugel 105 aus ihrer Ruhelage in dem Bereich der Ablaufdrossel 112 zu ermöglichen, mithin das Steuerventil zu öffnen. Der Zeitpunkt tET0 markiert somit einen Beginn der durch das Ansteuersignal I definierten Ansteuerdauer ET des elektromagnetischen Aktors 102, 104 und damit auch des Steuerventils 104, 105, 112 des Einspritzventils 100.

Aufgrund einer nichtverschwindenden Öffnungsverzugszeit t11 bewegt sich die Ventilkugel 105 erst ab dem tatsächlichen Öffnungszeitpunkt töff aus ihrer Schließlage im Bereich der Ablaufdrossel 112 heraus. Die Öffnungsverzugszeit t11 wird u.a. durch die mechanische und hydraulische Konfiguration des Einspritzventils 100 bzw. des Steuerventils bestimmt.

Die Bestromung des elektromagnetischen Aktors 102, 104 dauert gemäß dem in Figur 2 angegebenen Diagramm bis zu dem Ende tET1 der Ansteuerdauer ET an und kann über die Ansteuerdauer ET hinweg, wie in Figur 2 abgebildet, auch unterschiedliche Stromwerte aufweisen. Vorliegend ist für etwa die erste Hälfte der Ansteuerdauer ET ein größeres Stromniveau gewählt als für die zweite Hälfte der Ansteuerdauer ET, um ein besonders schnelles Öffnen des Steuerventils zu ermöglichen.

Seinen vollständig geöffneten Zustand hat das Steuerventil gemäß dem in Figur 2 abgebildeten, den Ventilhub h der Ventilkugel 105 wiedergebenden Diagramm, nach der Zeit t1 erreicht, die neben der bereits beschriebenen Öffnungsverzugszeit t11 auch diejenige Zeit t12 umfasst, die die Bewegung der Ventilkugel 105 von ihrer Schließlage heraus in ihre Öffnungslage benötigt.

Eine Schließverzugszeit t2 ergibt sich gemäß Figur 2 im Anschluss an das Ende tET1 der Ansteuerdauer ET. Die Schließverzugszeit t2 ergibt sich bei der Konfiguration des Einspritzventils 100 gemäß den Figuren 1a, 1b, 1c aus einer Haltverzugszeit t21 und einer sich daran anschließenden Schließflugzeit t22. Erst zu dem tatsächlichen Schließzeitpunkt ts = tET1 + t2 weist das Steuerventil des Einspritzventils 100 wieder seinen geschlossenen Zustand auf.

Sofern die Ventilkugel 105 des Steuerventils bei ihrem Schließvorgang noch ein Prellverhalten zeigt, ergeben sich hierdurch bedingt auch nach dem tatsächlichen Schließzeitpunkt ts weitere, verhältnismäßig kurz andauernde Zeitbereiche, während der das Steuerventil nicht vollständig geschlossen ist, und während denen dementsprechend Kraftstoff vom Ventilsteuerraum 106 durch die Ablaufdrossel 112 abfließt. Die Berücksichtigung solcher Prellzeiten tprell als faktische Verlängerung der Schließverzugszeit t2 kann in einer später detailliert beschriebenen Weise erfolgen.

Erfindungsgemäß ist vorgesehen, dass das Ansteuersignal I (vorliegend ein Ansteuerstrom), das eine gewünschte Öffnungsdauer für das Einspritzventil 100 charakterisiert, in Abhängigkeit von mindestens einer Ventilverzugszeit korrigiert wird, um ein korrigiertes Ansteuersignal Ikorr (Figur 1a) zur Ansteuerung des elektromagnetischen Aktors 102, 104 zu erhalten.

Das heißt, bei einer Ausführungsform des erfindungsgemäßen Verfahrens wird das Ansteuersignal I, insbesondere sein die Ansteuerdauer ET (Figur 2) charakterisierender Parameter, in Abhängigkeit von mindestens einer Ventilverzugszeit korrigiert. Dadurch ist eine präzisere Ansteuerung des Steuerventils insbesondere hinsichtlich seiner Öffnungsdauer möglich, wodurch auch die Einspritzdauer des Einspritzventils 100 genauer eingestellt und damit die Präzision bei der Kraftstoffzumessung verbessert werden kann.

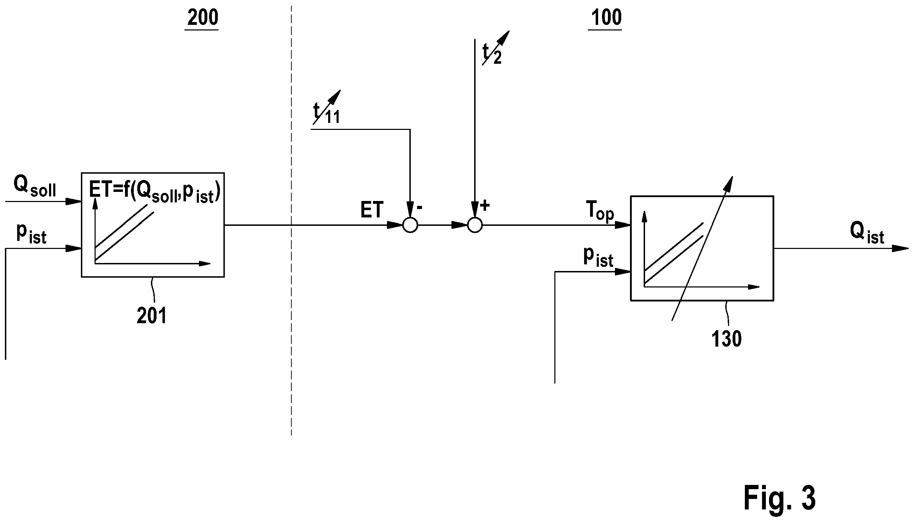

Nachstehend ist unter Bezugnahme auf das Funktionsdiagramm gemäß Figur 3 zunächst jedoch ein herkömmliches Betriebsverfahren für ein Einspritzventil 100 beschrieben, das keine erfindungsgemäße Korrektur des Ansteuersignals I bzw. seines Parameters ET durchführt.

In einem ersten, beispielsweise mittels eines Kennfelds, realisierten Funktionsblock 201 wird bei dem herkömmlichen Betriebsverfahren in Abhängigkeit der Betriebsgrößen einzuspritzende Kraftstoffmenge Qsoll, Kraftstoffdruck pist die Ansteuerdauer ET für die Ansteuerung des elektromagnetischen Aktors 102, 104 des Steuerventils mit einem entsprechenden Strom I (Figur 2) ermittelt.

Gleichsam als Störgrößen treten bei einer Ansteuerung des Steuerventils mit diesem auf herkömmliche Weise ermittelten, die Ansteuerdauer ET repräsentierenden Signal, die vorstehend näher beschriebenen zeitlich i.d.R. variablen Verzugszeiten t11, t2 zu der herkömmlich ermittelten Ansteuerdauer ET hinzu, so dass der Steuerraum 106 des Einspritzventils 100 tatsächlich mit einer modifizierten Ansteuergröße Top = ET - t11 + t2 angesteuert wird. Gegebenenfalls auftretende Toleranzen bei der Hochdruckhydraulik des Einspritzventils 100 sind in Figur 3 durch den Funktionsblock 130 symbolisiert. Aufgrund der vorstehend beschriebenen Ansteuerung mit dem Ansteuersignal Top und bei dem gegebenen Kraftstoffdruck pist ergibt sich bei dem herkömmlichen System die tatsächlich eingespritzte Kraftstoffmenge Qist am Ausgang des Funktionsblocks 130.

Durch den vorstehend bereits beschriebenen Einfluss der an sich unerwünschten Verzugszeiten t11, t2 handelt es sich bei der tatsächlich eingespritzten Kraftstoffmenge Qist in der Regel nicht um die einzuspritzende Kraftstoff-Sollmenge Qsoll, die der Berechnung der Ansteuerdauer ET in dem Steuergerät 200 (Figur 1a) zugrunde liegt.

Dementsprechend sieht das erfindungsgemäße Verfahren vorteilhaft eine Korrektur der Ansteuerdauer ET in Abhängigkeit mindestens einer Ventilverzugszeit des Einspritzventils 100 bzw. seines Steuerventils vor.

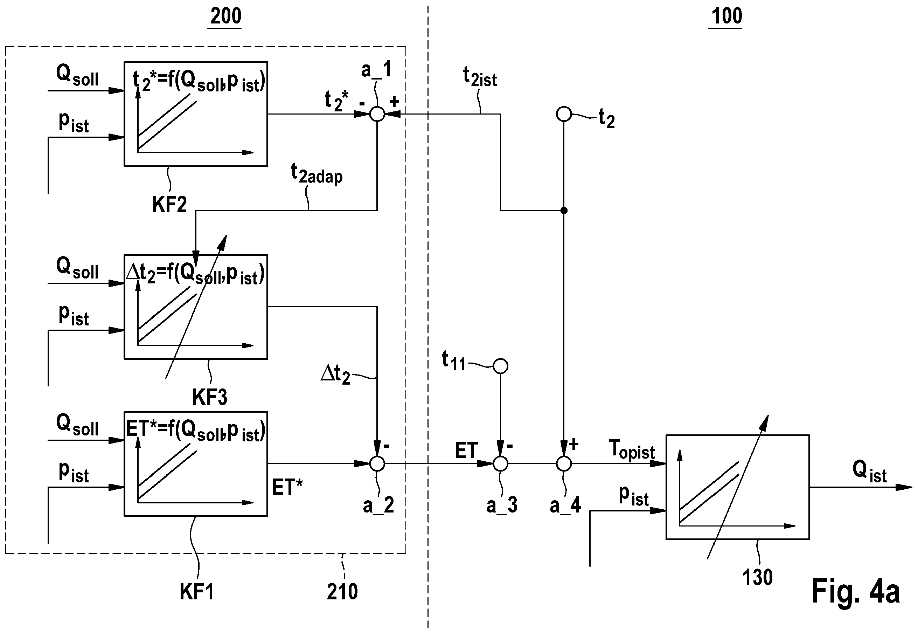

Eine erste Ausführungsform des erfindungsgemäßen Betriebsverfahrens ist nachfolgend unter Bezugnahme auf das Funktionsdiagramm gemäß Figur 4a beschrieben. Hierbei ist eine Korrektur einer zunächst unkorrigierten Ansteuerdauer ET* auf der Basis einer messtechnisch erfassten Schließverzugszeit t2ist vorgesehen.

Die unkorrigierte Ansteuerdauer ET* wird vorliegend durch ein erstes Kennfeld KF1 in Abhängigkeit der Betriebsgrößen Qsoll, pist gebildet. Bei dem ersten Kennfeld KF1 handelt es sich bevorzugt um ein statisches Kennfeld, welches über die gesamte Lebensdauer des Steuergeräts 200 beziehungsweise des Einspritzventils 100 unverändert bleibt.

Über das ebenfalls in dem Steuergerät 200 realisierte zweite Kennfeld KF2 wird aus der Sollmenge Qsoll und dem Raildruck pist eine Soll-Schließverzugszeit t2* ermittelt, die in dem ersten Addierer a_1 subtrahiert wird von der erfindungsgemäß messtechnisch erfassten tatsächlichen Schließverzugszeit t2ist. Ausgangsseitig des ersten Addierers a_1 ergibt sich demnach ein Schließverzugszeit-Adaptionswert t2adap = t2ist - t2*.

Die von dem Kennfeld KF2 gelieferte Soll-Schließverzugszeit t2* stellt diejenige Schließverzugszeit t2 dar, die das Steuerventil aufweisen muss, damit die unkorrigierte Ansteuerdauer ET* unter den vorstehend beschriebenen Störeinflüssen t11, t2 zu der gewünschten Ventilöffnungsdauer des Steuerventils und damit zu der gewünschten Einspritzmenge führt.

Der erfindungsgemäß ermittelte Schließverzugszeit-Adaptionswert t2adap wird einem dritten Kennfeld KF3 zugeführt.

Das dritte Kennfeld KF3 ermittelt aus den Eingangsgrößen Qsoll, pist einen Schließverzugszeit-Korrekturwert Δt2, der erfindungsgemäß zur Korrektur des unkorrigierten Ansteuerdauerwerts ET* verwendet wird, was rechnerisch durch die Subtraktion des Schließverzugszeit-Korrekturwerts Δt2 von der unkorrigierten Ansteuerdauer ET* mittels des zweiten Addierers a_2 bewerkstelligt wird: ET = ET* - Δt2.

Der Schließverzugszeit-Adaptionswert t2adap wirkt vorteilhaft auf das adaptiv ausgelegte dritte Kennfeld KF3 und beeinflusst hiermit in Abhängigkeit der tatsächlichen Schließverzugszeit t2ist die erfindungsgemäße Bildung des Schließverzugszeit-Korrekturwerts Δt2. Durch eine geeignete Bedatung des dritten Kennfelds KF3 und eine geeignete Modifikation des adaptiven Kennfelds KF3 durch den Schließverzugszeit-Adaptionswert t2adap ist auf diese Weise vorteilhaft sichergestellt, dass sich bei einer ändernden tatsächlichen Schließverzugszeit t2ist vorteilhaft auch eine entsprechende Änderung des Schließverzugszeit-Korrekturwerts Δt2 ergibt.

Die erfindungsgemäße Messung der tatsächlichen Schließverzugszeit t2ist kann einer Ausführungsform zufolge permanent oder auch periodisch durchgeführt werden. Alternativ ist es möglich, die tatsächliche Schließverzugszeit t2ist nur dann messtechnisch zu erfassen, beziehungsweise modellbasiert zu ermitteln, wenn vorgebbare, beispielsweise applizierbare, Freigabebedingungen vorliegen. Auch die Art und Weise, wie der Schließverzugszeit-Adaptionswert t2adap Einfluss nimmt auf das adaptive dritte Kennfeld KF3 kann in dem Fachmann bekannter Weise unterschiedlich realisiert werden, beispielsweise umfassend eine Filterung, eine Berücksichtigung der Auswirkung auf benachbarte Stützstellen des dritten Kennfelds KF3 usw. Eine Messprinzip für die Schließverzugszeit ist beispielsweise aus DE 38 431 138 bekannt.

Erfindungsgemäß wird demnach durch das in Figur 4a veranschaulichte Verfahren aus einem unkorrigierten Wert für die Ansteuerdauer ET* am Ausgang des zweiten Addierers a_2 ein korrigierter Wert für die Ansteuerdauer ET erhalten, der zur Ansteuerung des Einspritzventils 100 beziehungsweise seines elektromagnetischen Aktors 102, 104 verwendet wird. Die prinzipbedingt auftretenden Verzugszeiten t11, t2 werden dem erfindungsgemäß korrigierten Ansteuerwert ET durch die weiteren Addierer a_3, a_4 vorzeichenrichtig zugeschlagen, so dass dem eine Charakteristik der hydraulischen Hochdruckkomponenten repräsentierenden Funktionsblock 130 eingangsseitig die Größe Topist = ET - t11 + t2 für die Ansteuerdauer sowie der tatsächliche Kraftstoffdruck pist zugeführt werden, wodurch sich an dem Ausgang des Funktionsblocks 130 in bekannter Weise die tatsächlich eingespritzte Kraftstoffmenge Qist ergibt.

Aufgrund der erfindungsgemäßen Korrektur der Ansteuerdauer ET in Abhängigkeit der vorliegend messtechnisch erfassten Schließverzugszeit t2 ergibt sich gegenüber dem in Figur 3 schematisch abgebildeten herkömmlichen Verfahren eine bessere Übereinstimmung zwischen der tatsächlich eingespritzten Kraftstoffmenge Qist und der gewünschten Kraftstoffmenge Qsoll. Der Störeinfluss der Ventilverzugszeiten auf die Einspritzmenge kann unter Anwendung des erfindungsgemäßen Prinzips deutlich reduziert werden.

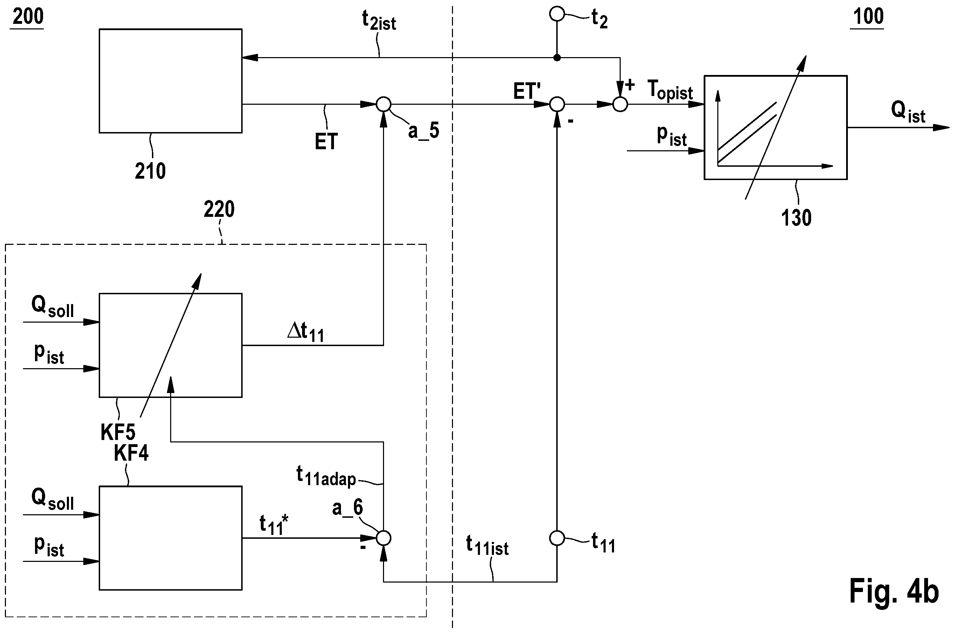

Das nachstehend unter Bezugnahme auf Figur 4b beschriebene Funktionsdiagramm repräsentiert eine weitere Ausführungsform des erfindungsgemäßen Betriebsverfahrens, bei dem zusätzlich zu der Schließverzugszeit t2 auch die Öffnungsverzugszeit t11 des Steuerventils berücksichtigt wird, um die Ansteuerdauer ET zu korrigieren.

Die vorstehend unter Bezugnahme auf Figur 4a beschriebenen, in dem Steuergerät 200 realisierten Funktionsblöcke sind in Figur 4b zu dem Funktionsblock 210 zusammengefasst, dem wie bereits beschrieben, eingangsseitig die erfindungsgemäß betrachtete tatsächliche Schließverzugszeit t2ist zugeführt wird, und der gemäß der detaillierten Darstellung aus Figur 4a an seinem Ausgang eine um den Schließverzugszeit-Korrekturwert Δt2 korrigierten Wert ET für die Ansteuerdauer ausgibt.

Erfindungsgemäß ist zur Berücksichtigung der Öffnungsverzugszeit t11 in Figur 4b der weitere Funktionsblock 220 vorgesehen.

Analog zu der Funktion des zweiten Kennfelds KF2 gemäß Figur 4a weist der zweite Funktionsblock 220 in Figur 4b ein viertes Kennfeld KF4 auf, das aus den Betriebsgrößen Qsoll, pist eine Soll-Öffnungsverzugszeit t11 * bildet.

Bei der Soll-Öffnungsverzugszeit t11 * handelt es sich ebenso wie bei der Größe t2* um eine Verzugszeit, wie sie sich betriebsgrößenabhängig für ein Referenz-Einspritzventil, beispielsweise ein Einspritzventil 100, das einen Neuzustand aufweist, ergibt. Die Größen t2*, t11* können daher zur Initialisierung der Kennfelder KF2, KF4 beispielsweise durch Messungen an den Referenzventilen in allen interessierenden Betriebspunkten (Qsoll, pist) ermittelt werden.

Erfindungsgemäß wird ein Öffnungsverzugszeit-Adaptionswert t11adap durch Subtraktion der Soll-Öffnungsverzugszeit t11* von der messtechnisch erfassten tatsächlichen Öffnungsverzugszeit t11 ist gebildet, was rechnerisch durch den Addierer a_6 ermöglicht ist.

Der Öffnungsverzugszeit-Adaptionswert t11adap wird dem fünften Kennfeld KF5 zugeführt, welches ein adaptives Kennfeld ist, und welches analog zu dem dritten Kennfeld KF3 gemäß Figur 4a eine Modifikation des funktionalen Zusammenhangs zwischen einem Öffnungsverzugszeit-Korrekturwert Δt11 und den eingangsseitig zugeführten Betriebsgrößen Qsoll, pist und dem Öffnungsverzugszeit-Adaptionswert t11 adap ermöglicht.

Auf diese Weise kann über den gesamten Betrieb des Einspritzventils 100 hinweg ein Öffnungsverzugszeit-Korrekturwert Δt11 gebildet werden, der dynamisch in Abhängigkeit der tatsächlichen Verzugszeit t11 ist und der Soll-Öffnungsverzugszeit t11 * erhalten wird.

Über den Addierer a_5 wird der Öffnungsverzugszeit-Korrekturwert Δt11 mit dem Wert ET für die Ansteuerdauer verknüpft, wie er durch den bereits unter Bezugnahme auf Figur 4a beschriebenen Funktionsblock 210 erhalten wird.

Der erfindungsgemäß um beide Ventilverzugszeiten t11, t2 korrigierte Wert ET' für die Ansteuerdauer wird dem Einspritzventil 100 zugeführt, wo er zunächst wie bereits unter Bezugnahme auf Figur 4a beschrieben der Beeinflussung durch die realen Ventilverzugszeiten t11, t2 unterliegt, so dass zur eingangsseitigen Beaufschlagung des Funktionsblocks 130 wiederum die Größen Topist = ET' - t11 + t2, pist erhalten werden.

Durch die erfindungsgemäße Berücksichtigung beider Ventilverzugszeiten t11, t2 ist bei dem in Figur 4b veranschaulichten Ausführungsbeispiel des erfindungsgemäßen Betriebsverfahrens eine besonders gute Übereinstimmung der tatsächlich eingespritzten Kraftstoffmenge Qist mit der Sollmenge Qsoll gegeben.

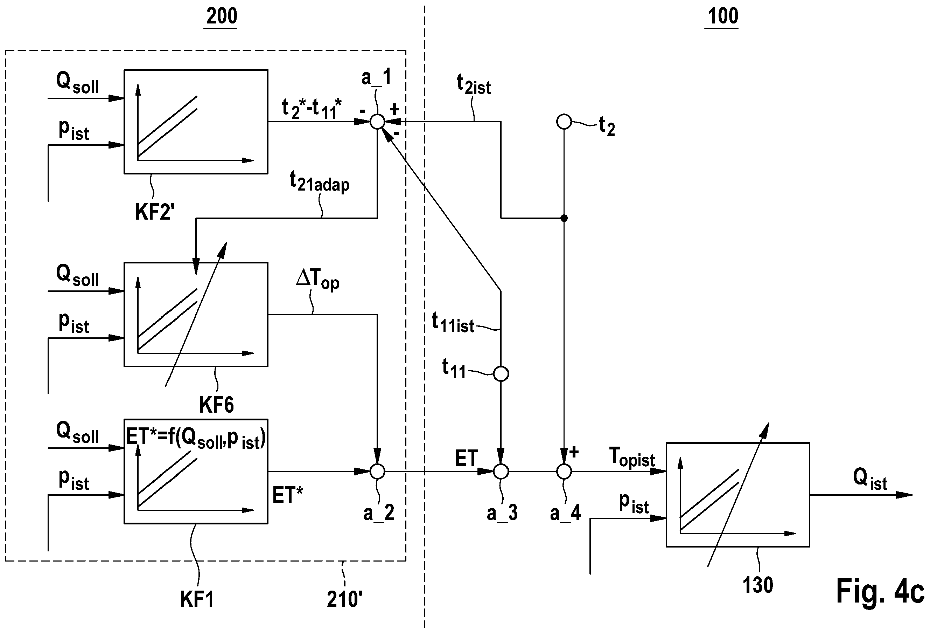

Eine vereinfachte Funktionsstruktur zur Korrektur des Ansteuersignals beziehungsweise der Ansteuerdauer ET in Abhängigkeit beider Ventilverzugszeiten t11, t2 ist in Figur 4c angegeben.

Anstelle des in Figur 4a gezeigten zweiten Kennfelds KF2 ist bei der Ausführungsform gemäß Figur 4c ein modifiziertes zweites Kennfeld KF2' vorgesehen, das in Abhängigkeit der Eingangsgrößen Qsoll, pist die Differenz t2* - t11 * ausgibt. Diese Differenz wird erfindungsgemäß durch den Addierer a_1 abgezogen von der Differenz der tatsächlichen Ventilverzugszeiten t11 ist, t2ist, so dass ein weiteres Adaptionssignal t21 adap an dem Ausgang des ersten Addierers a_1 erhalten wird. Dieses weitere Adaptionssignal t21 adap wirkt auf das Kennfeld KF6, welches anstelle der seither betrachteten Korrekturwerte Δt11, Δt2 nunmehr in Abhängigkeit der Betriebsgrößen Qsoll, pist und des weiteren Adaptionswerts t21 adap einen Korrekturwert ΔTop für die Öffnungszeit ausgibt.

Der Korrekturwert ΔTop für die Öffnungszeit wird dem unkorrigierten Ansteuerdauerwert ET* durch den zweiten Addierer a_2 hinzuaddiert, so dass am Ausgang des zweiten Addierers a_2 ein erfindungsgemäß korrigierter Ansteuerwert ET zur Ausgabe an das Einspritzventil 100 vorliegt.

Das heißt, bei der Ausführungsform gemäß Figur 4c ist die erfindungsgemäße Betrachtung der Ventilverzugszeiten t11, t2 durch die Kennfelder KF2', KF6 realisiert, und nicht auf die Kennfelder KF2, KF3 (Figur 4a) sowie KF4, KF5 (Figur 4b) verteilt. Die Funktionalität 210' ist wiederum in dem Steuergerät 200 (Figur 1a) bzw. einer darin enthaltenen Recheneinheit wie z.B. einem Mikrocontroller oder digitalen Signalprozessor (DSP) realisiert.

Anstelle der Kraftstoff-Sollmenge Qsoll kann bei den Kennfeldern KF2, KF2', KF3, KF4, KF5, KF6 auch die unkorrigierte Ansteuerdauer ET* als Eingangsgröße verwendet werden.

Die bereits unter Bezugnahme auf Figur 2 beschriebene Situation des Prellens der Ventilkugel 105 (Figur 1a) bei dem Schließen des Steuerventils kann einer weiteren Ausführungsform des erfindungsgemäßen Betriebsverfahrens zufolge dadurch berücksichtigt werden, dass anstelle der Schließverzugszeit t2 (Figur 2) eine um eine virtuelle Schließdauerverlängerung t2p,eff erweiterte Schließverzugszeit t2 + t2p,eff berücksichtigt wird. Die virtuelle Schließdauerverlängerung t2p,eff gibt hierbei an, welche Zeit zu der Schließverzugszeit t2 hinzuzuschlagen ist, um die aufgrund des Prellens erhaltene Mehrmenge bei der Kraftstoffeinspritzung entsprechend zu berücksichtigen.

Die virtuelle Schließdauerverlängerung kann beispielsweise in Abhängigkeit eines in dem Steuergerät 200 hinterlegten Kennfelds oder einer Kennlinie ermittelt werden. Die erweiterte Schließverzugszeit kann dann anstelle des bisherigen Werts t2 beziehungsweise t2ist zur erfindungsgemäßen Korrektur des Werts für die Ansteuerdauer ET verwendet werden.

Die Sollwert-Kennfelder KF2, KF2', KF4 können einer besonders bevorzugten Erfindungsvariante zufolge zu Beginn einer Betriebszeit des Einspritzventils 100 für ein begrenztes Betriebsdauer-Laufleistungsintervall adaptiv veränderbar sein. In dieser Variante wird das Sollwert-Kennfeld zunächst mit den entsprechenden Istwerten eines seinen Neuzustand aufweisenden Einspritzventils 100 beschrieben. Dies hat zur Folge, dass nur Veränderungen der Ventilverzugszeit des Einspritzventils 100 im Laufe seiner Lebensdauer korrigiert werden, nicht jedoch Abweichungen seiner Ventilverzugszeit im Neuzustand von einem vorgegebenen Sollwert.

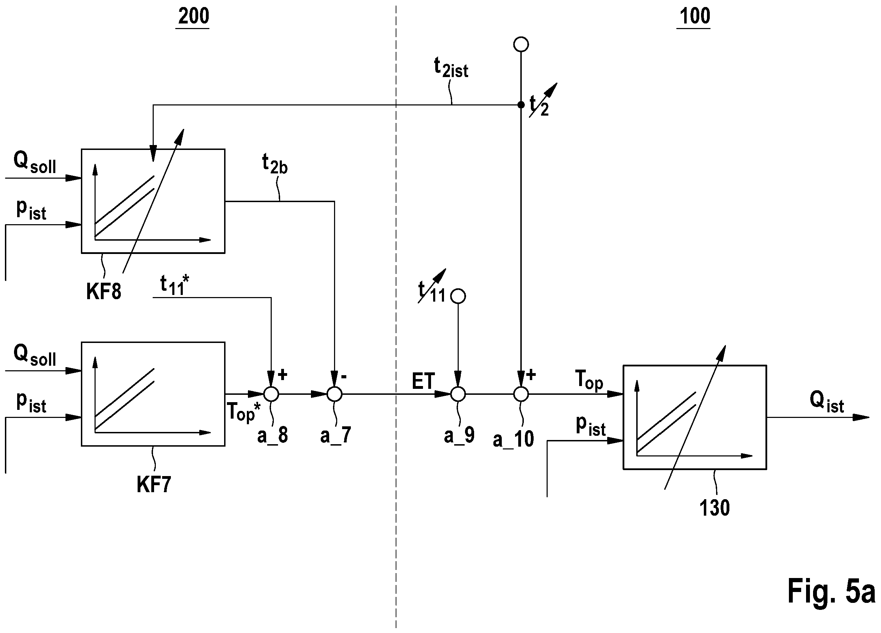

Figur 5a zeigt ein Funktionsdiagramm zur Realisierung einer weiteren Ausführungsform des erfindungsgemäßen Betriebsverfahrens.

Zunächst wird anstelle der Ansteuerdauer ET für die Beaufschlagung des Einspritzventils 100 beziehungsweise seines elektromagnetischen Aktors 102, 104 mit dem Ansteuerstrom I durch das Kennfeld KF7 aus den Betriebsgrößen Qsoll, pist eine Soll-Öffnungsdauer Top* des Steuerventils des Einspritzventils 100 ermittelt. Das Kennfeld KF7 bleibt bevorzugt über die gesamte Lebensdauer des Einspritzventils 100 unverändert, das heißt es ist ein statisches Kennfeld.

Erfindungsgemäß wird zu der Soll-Öffnungsdauer Top* mittels des Addierers a_8 die erwartete Öffnungsverzugszeit t11* addiert. Je nach dem Öffnungsverhalten des Steuerventils kann es sich bei der erwarteten Öffnungsverzugszeit t11* um einen festen Wert oder auch um einen mittels eines vorzugsweise statischen Kennfelds beispielsweise als Funktion der Sollmenge Qsoll und des Kraftstoffdrucks pist ermittelten Wert handeln.

Die in Figur 5a veranschaulichte Ausführungsform des erfindungsgemäßen Betriebsverfahrens sieht ferner die Bildung eines Korrekturwerts t2b vor, der mittels eines adaptiven Kennfelds KF8 in Abhängigkeit der Betriebsgrößen Qsoll, pist erhalten wird. Das Kennfeld KF8 ist adaptiv ausgebildet und ermöglicht dementsprechend eine variable Erzeugung des Korrekturwerts t2b in Abhängigkeit der tatsächlichen Schließverzugszeit t2ist, die vorliegend wie bereits mehrfach beschrieben messtechnisch erfasst wird.

Über den Addierer a_7 wird der Korrekturwert t2b bei der Bildung der Ansteuerdauer ET berücksichtigt gemäß ET = Top* + t11* - t2b. Somit kann die Wirkung der realen Schließverzugszeit t2 auf die Einspritzmenge durch eine entsprechende Anpassung der Ansteuerdauer ET kompensiert werden. Die weitere "Verarbeitung" der Ansteuerdauer ET innerhalb des Einspritzventils 100 in Figur 5a erfolgt analog zu den vorstehend beschriebenen Ausführungsformen der Erfindung, wobei die Störgrößen bildenden realen Ventilverzugszeiten t11, t2 über die Addierer a_9 und a_10 berücksichtigt werden.

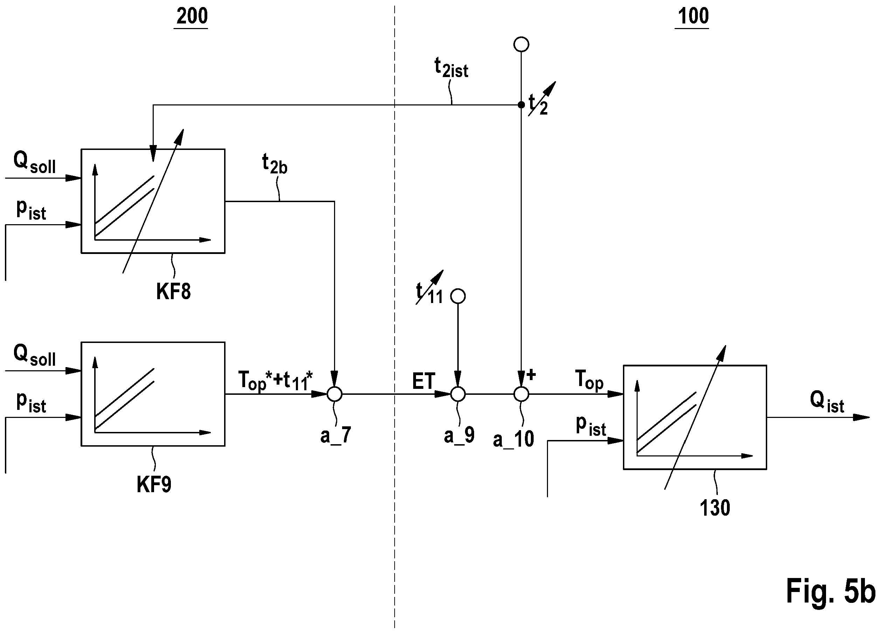

Eine weitere, gegenüber der vorstehend unter Bezugnahme auf Figur 5a beschriebenen Erfindungsvariante vereinfachte Struktur eines das erfindungsgemäße Verfahren repräsentierenden Funktionsdiagramms ist in Figur 5b angegeben.

Dort wird anstelle der Soll-Öffnungsdauer Top* durch das Kennfeld KF7 bereits die Summe aus der Soll-Öffnungsdauer Top* und der erwarteten Öffnungsverzugszeit t11* vermöge des Kennfelds KF9 in Abhängigkeit der Betriebsgrößen Qsoll, pist erhalten. Der Korrekturwert t2b wird analog zu der unter Figur 5a beschriebenen Verfahrensvariante erhalten und der Summe Top* + t11* über den Addierer a_7 hinzugefügt. Am Ausgang des Addierers a_7 wird somit wiederum ein korrigierter Wert für die Ansteuerdauer ET erhalten, der dem Einspritzventil 100 erfindungsgemäß zugeführt wird.

Für den Fall, dass auch für die Öffnungsverzugszeit t11 ein Messwert oder ein modellbasiert ermittelter Wert vorliegt, kann bei den unter Bezugnahme auf die Figuren 5a, 5b beschriebenen Erfindungsvarianten anstelle der erwarteten Öffnungsverzugszeit t11* die real gemessene tatsächliche Öffnungsverzugszeit t11 ist beziehungsweise die modellbasiert ermittelte Öffnungsverzugszeit verwendet werden. Hierzu kann ein separater Rechenschritt vorgesehen sein, bei dem die tatsächliche Öffnungsverzugszeit t11 ist vergleichbar zu dem Funktionsblock 220 gemäß Figur 4b verarbeitet und zur Modifikation eines adaptiven Kennfelds für einen entsprechenden Korrekturwert Δt11 verwendet wird.

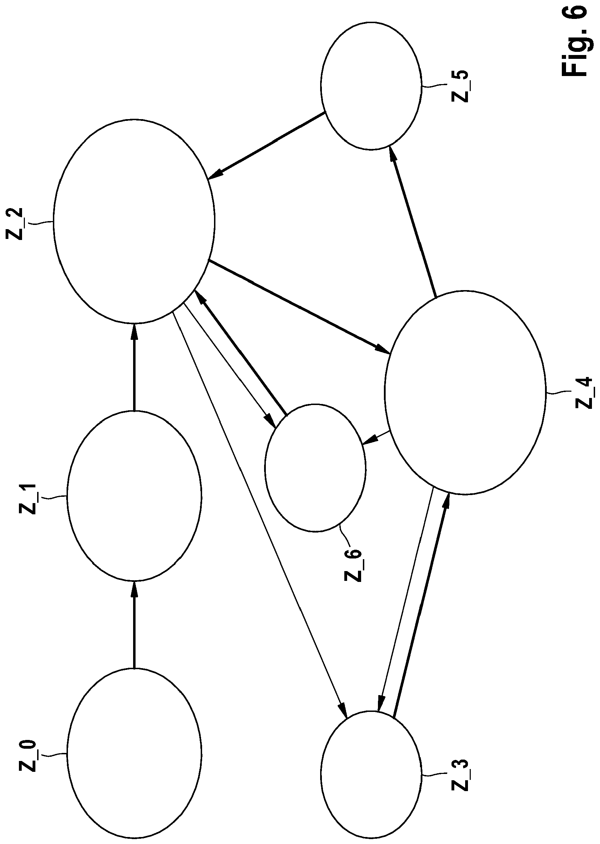

Figur 6 zeigt ein Zustandsdiagramm einer weiteren bevorzugten Ausführungsform des erfindungsgemäßen Betriebsverfahrens, das einen Lernvorgang beschreibt, in dessen Rahmen ein für die Durchführung der erfindungsgemäßen Korrektur des Ansteuersignals I bzw. ET verwendetes Kennfeld mit Kennfeldwerten bedatet wird, die einem eingesetzten Einspritzventil 100 entsprechen. Beispielsweise kann das Kennfeld KF2 aus Figur 4a auf die nachstehend unter Bezugnahme auf Figur 6 beschriebene Weise bedatet werden.

Der Zustand Z_0 entspricht einem Auslieferungszustand des Steuergeräts 200 (Figur 1a), in dem das Kennfeld KF2 beispielsweise mit Nullwerten initialisiert ist.

In dem Folgezustand Z_1 wird das Kennfeld KF2 zunächst mit mittelwertigen Schließdauerwerten bzw. Schließverzugszeiten t2* eines als ideal angesehenen Einspritzventils bedatet, die beispielsweise im Rahmen einer Messreihe über mehrere Einspritzventile erhalten und für diesen Zweck am Ende eines Fertigungsprozesses des Einspritzventils 100 vorgehalten werden. Parallel hierzu wird das dem Kennfeld KF2 zugeordnete, auch als Korrekturkennfeld bezeichnete, weitere Kennfeld KF3 (Figur 4a) mit Nullwerten initialisiert.

Auf den Zustand Z_1 folgt der auch als Neuzustands-Lernphase bezeichnete Zustand Z_2, in dem tatsächlich auftretende Schließverzugszeiten t2* des Einspritzventils 100 z.B. messtechnisch erfasst und arbeitspunktabhängig in dem Kennfeld KF2 hinterlegt werden. Der Zustand Z_2 ist - gegenüber den Vorgängerzuständen Z_0, Z_1 - dadurch gekennzeichnet, dass er erst dann eingenommen werden kann, wenn das Einspritzventil 100 seinen Betrieb in dem Einspritzsystem der Brennkraftmaschine aufnimmt. Zweckmäßigerweise wird für jedes Einspritzventil 100 der Brennkraftmaschine ein eigenes Kennfeld KF2, KF3 vorgesehen, u.a. um Stückstreuungen Rechnung zu tragen.

Die Neuzustands-Lernphase Z_2 kann vorteilhaft auch eine Tiefpassfilterung zu lernender Schließverzugszeiten t2* vorsehen, um den negativen Einfluss von Ausreißern auf den Lernprozess zu minimieren.

Da das Kennfeld KF2 üblicherweise durch ein vorgegebenes Raster von Wertepaaren (Qsoll, pist) gebildet ist, denen jeweils ein Schließverzugszeitwert t2* zugeordnet ist, kann auch die Anwendung von Interpolations- oder Glättungsverfahren vorgesehen sein, um - ausgehend von den tatsächlich während des Betriebs des Einspritzventils 100 auftretenden Werten für Qsoll, pist - festzulegen, welchem Wertepaar (Qsoll, pist) des Kennfelds KF2 der zu lernende Wert zugeordnet wird, oder inwieweit ein zu lernender Wert z.B. in Abhängigkeit von benachbarten, bereits erlernten Werten des Kennfelds KF2 zu modifizieren ist, um eine Differenz zwischen den tatsächlichen Werten für Qsoll, pist und dem Raster des Kennfelds KF2 zu berücksichtigen.

Auch während des Zustands Z_2 bleiben die Werte des Korrekturkennfelds KF3 mit Nullwerten initialisiert. Die während des Zustands Z_2 erlernten Werte des Kennfelds KF2 werden nach jedem Betriebszyklus persistent gespeichert, so dass sie als Ausgangspunkt für einen nachfolgenden Fahrzyklus dienen.

Die Neuzustands-Lernphase Z_2 ist bevorzugt auf eine vorgebbare Maximalzahl von Lernzyklen je Arbeitspunkt, d.h. je Wertepaar (Qsoll, pist), und/oder eine vorgebbare Zeitdauer begrenzt. Als weiteres Kriterium für den erfolgreichen Abschluss der Lernphase kann ein Unterschreiten einer minimal erforderlichen Lernänderung verwendet werden, d.h. sobald der Lernprozess zu einer nur noch geringfügigen Modifikation bereits gelernter Werte führt, wird der Lernprozess als abgeschlossen betrachtet.

Sobald diese Kriterien erfüllt sind, wird das Kennfeld KF2 als hinreichend an das betreffende Einspritzventil 100 angepasst, mithin als "gelernt", betrachtet. Der Abschluss der Lernvorgangs wird durch einen Zustandsübergang von Z_2 zu Z_4 repräsentiert. An den Zustand Z_4 schließt sich eine später näher beschriebene Korrekturphase an. Zunächst werden jedoch die weiteren Zustände des erfindungsgemäßen Lernprozesses gemäß Figur 6 beschrieben.

Ausgehend von der Neuzustands-Lernphase Z_2 kann der Fall eintreten, dass das Steuergerät 200 (Figur 1a) ausgetauscht wird, beispielsweise aufgrund eines Defekts. In diesem Fall wird von dem Zustand Z_2 in den Zustand Z_3 verzweigt, in dem das zunächst leere Kennfeld KF2 des Austauschgeräts mit mittelwertigen Schließverzugszeitwerten t2* eines als ideal angesehenen Einspritzventils bedatetwird, vgl. Zustand Z_1, und anschließend erfolgt wiederum eine Neuzustands-Lernphase, um schließlich den Zustand Z_4 einnehmen zu können.

Ausgehend von der Neuzustands-Lernphase Z_2 führt der Austausch eines einzelnen Einspritzventils zu einem Zustandsübergang in den Zustand Z_6, in dem nur das dem ausgetauschten Einspritzventil zugeordnete Kennfeld KF2 zunächst mit mittelwertigen Schließverzugszeitwerten t2* eines als ideal angesehenen Einspritzventils bedatet wird.

Der Austausch aller Einspritzventile führt auf den Zustand Z_5, der eine zu dem Zustand Z_1 vergleichbare Funktionalität aufweist.

Sobald der Zustand Z_4 erreicht ist, mithin ein Lernprozess für das Kennfeld KF2 bzw. alle Kennfelder der einzelnen Einspritzventile 100 abgeschlossen ist, kann eine Korrekturphase eintreten. Während der Korrekturphase werden tatsächlich auftretende Schließverzugszeitwerte t2* erfasst und von den Kennfeldwerten des Kennfelds KF2 subtrahiert. Die hierbei erhaltenen Differenzwerte oder hieraus abgeleitete Werte, vgl. die Größe t2adap aus Figur 4a, werden für den entsprechenden Arbeitspunkt in dem Korrekturkennfeld KF3, das seither mit Nullwerten initialisiert war, abgelegt. Das Speichern der Differenzwerte in dem Korrekturkennfeld KF3 kann ebenso erfolgen wie vorstehend für die Speicherung von Werten in dem Kennfeld KF2 beschrieben, d.h. unter Anwendung von Interpolations- und/oder Glättungsverfahren usw.

Nach jedem Betriebszyklus wird das Korrekturkennfeld KF3 persistent gespeichert als Ausgangspunkt für einen nachfolgenden Betriebszyklus. Während der Korrekturphase erfolgt keine weitere Änderung des bereits gelernten Kennfelds KF2.

Ergänzend kann auch ein Gewichtungskennfeld vorgesehen sein, das arbeitspunktabhängig einen Versatz und eine Verstärkung einer Änderung der Ansteuerdauer ET auf eine Schließdaueränderung berücksichtigt. Eine Ausgangsgröße des Gewichtungskennfelds kann vorteilhaft mit der Ausgangsgröße des Korrekturkennfelds KF3 kombiniert werden, um das Ansteuersignal bzw. die Ansteuerdauer ET zu beeinflussen.

Anstelle der direkten Speicherung erlernter Werte eines Einspritzventils 100 in dem Kennfeld KF2 (Figur 4a) ist auch vorstellbar, die erlernten Werte direkt in einem dem Einspritzventil 100 zugeordneten oder sogar darin integrierten Speicher zu speichern. Dadurch kann das Einspritzventil 100 bereits während seiner Fertigung im Sinne der Bildung des Kennfelds KF2 "gelernt" werden, und bei einem späteren Austausch eines z.B. defekten Bestandsventils gegen das Einspritzventil 100 kann das Steuergerät 200 die Kennfeldwerte des "neuen" Einspritzventils 100 direkt aus dem Speicher entnehmen, sodass der Lernprozess für das Kennfeld KF2 nach dem Ventiltausch vorteilhaft entfällt, das neue Einspritzventil mithin direkt erfindungsgemäß betrieben werden kann, um eine besonders präzise Kraftstoffeinspritzung zu erzielen.

Das erfindungsgemäße Verfahren ist vorteilhaft auch auf andere aktorbetätigte Ventile als Kraftstoffeinspritzventile von Brennkraftmaschinen anwendbar, bei denen Ventilverzugszeiten des beschriebenen Typs auftreten. Generell kann das erfindungsgemäße Verfahren auf alle aktorbetätigten Ventile angewandt werden, die eine nicht verzögerungsfreie Wirkungskette zwischen Aktoransteuerung und Ventilbetätigung aufweisen. Die individuellen Ursachen für Verzögerungen wie z.B. Toleranzen der hydraulischen Komponenten, mechanisches Spiel, Anstiegszeiten elektrischer Ansteuersignale z.B. aufgrund parasitärer Induktivitäten usw. sind für das Funktionieren des erfindungsgemäßen Prinzips nicht von Bedeutung. Das erfindungsgemäße Verfahren kann insbesondere auch auf "direkt" betätigte Ventile angewandt werden, also solche Ventile, bei denen der Aktor 102, 104 (Figur 1a) direkt auf z.B. die Ventilnadel 116 wirkt, und bei denen die Wirkungskette zwischen Aktor 102, 104 und Ventilnadel 116 kein Steuerventil 104, 105, 112 aufweist, wenn die entsprechenden Verzugszeiten ermittelbar bzw. messtechnisch erfassbar sind.

## Patentansprüche

1. Verfahren zum Betreiben eines mittels eines Aktors (102, 104) betätigten Ventils (100), insbesondere eines Einspritzventils (100) einer Brennkraftmaschine eines Kraftfahrzeugs, bei dem der Aktor (102, 104) mit einem eine gewünschte Öffnungsdauer (Top*) des Ventils (100) charakterisierenden Ansteuersignal (I) angesteuert wird, dass das die gewünschte Öffnungsdauer (Top*) charakterisierende Ansteuersignal (I) in Abhängigkeit von einer Ventilverzugszeit (t11, t2) korrigiert wird, um ein korrigiertes Ansteuersignal (Ikorr) zur Ansteuerung des Aktors (102, 104) zu erhalten, wobei die Ventilverzugszeit (t11, t2) eine zeitliche Abweichung zwischen dem Ansteuersignal (I) und einer tatsächlichen Änderung eines Betriebszustands mindestens einer Komponente des Ventils (100), insbesondere einer Ventilnadel (116), repräsentiert. **dadurch gekennzeichnet, dass** in Abhängigkeit von Betriebsgrößen der Brennkraftmaschine, eine unkorrigierte Ansteuerdauer (ET*) ermittelt wird, und dass die unkorrigierte Ansteuerdauer (ET*) korrigiert wird mittels eines Schließverzugszeit-Korrekturwerts (Δt2), der in Abhängigkeit einer tatsächlichen Schließverzugszeit (t2ist) ermittelt wird, dass in Abhängigkeit von Betriebsgrößen der Brennkraftmaschine, eine Soll-Schließverzugszeit (t2*) ermittelt wird, dass ein Schließverzugszeit-Adaptionswert (t2adap) in Abhängigkeit einer Abweichung zwischen der tatsächlichen Schließverzugszeit (t2ist) und der Soll-Schließverzugszeit (t2*) ermittelt wird, und dass in Abhängigkeit von Betriebsgrößen der Brennkraftmaschine, und von dem Schließverzugszeit-Adaptionswert (t2adap), der Schließverzugszeit-Korrekturwert (Δt2) ermittelt wird.

2. Verfahren nach Anspruch 1, **dadurch gekennzeichnet, dass** das Ansteuersignal (I) in Abhängigkeit von einer, insbesondere messtechnisch und/oder modellbasiert ermittelten, tatsächlichen Schließverzugszeit (t2ist) des Ventils (100) korrigiert wird, die einer Zeitdifferenz zwischen einem Ende (tET1) der durch das Ansteuersignal (I) definierten Ansteuerdauer (ET) und einem tatsächlichen Schließzeitpunkt (ts) entspricht.

3. Verfahren nach Anspruch 2, **dadurch gekennzeichnet, dass** ein Prellen einer Ventilnadel (116) und/oder eines sonstigen Ventilelements (104) des Ventils (100) berücksichtigt wird bei der Ermittlung der tatsächlichen Schließverzugszeit (t2ist).

4. Verfahren nach einem der vorstehenden Ansprüche, **dadurch gekennzeichnet, dass** das Ansteuersignal (I) in Abhängigkeit von einer, insbesondere messtechnisch und/oder modellbasiert ermittelten, tatsächlichen Öffnungsverzugszeit (t11) des Ventils (100) korrigiert wird, die einer Zeitdifferenz zwischen einem Beginn (tET0) der durch das Ansteuersignal (I) definierten Ansteuerdauer (ET) und einem tatsächlichen Öffnungszeitpunkt (töff) entspricht.

5. Verfahren nach einem der vorstehenden Ansprüche, **dadurch gekennzeichnet, dass** in Abhängigkeit von Betriebsgrößen der Brennkraftmaschine, insbesondere in Abhängigkeit einer durch das Ventil (100) einzuspritzenden Sollmenge (Qsoll) und/oder eines Kraftstoffdrucks (pist), vorzugsweise mittels eines ersten Kennfelds (KF1), eine unkorrigierte Ansteuerdauer (ET*) ermittelt wird, und dass die unkorrigierte Ansteuerdauer (ET*) korrigiert wird mittels eines Schließverzugszeit-Korrekturwerts (Δt2), der in Abhängigkeit der tatsächlichen Schließverzugszeit (t2) ermittelt wird.

6. Verfahren nach Anspruch 5, **dadurch gekennzeichnet, dass** in Abhängigkeit von Betriebsgrößen der Brennkraftmaschine, insbesondere in Abhängigkeit einer durch das Ventil (100) einzuspritzenden Sollmenge (Qsoll) und/oder eines Kraftstoffdrucks (pist), vorzugsweise mittels eines zweiten Kennfelds (KF2), eine Soll-Schließverzugszeit (t2*) ermittelt wird, dass ein Schließverzugszeit-Adaptionswert (t2adap) in Abhängigkeit einer Abweichung zwischen der tatsächlichen Schließverzugszeit (t2ist) und der Soll-Schließverzugszeit (t2*) ermittelt wird, und dass in Abhängigkeit von Betriebsgrößen der Brennkraftmaschine, insbesondere in Abhängigkeit der Sollmenge (Qsoll) und/oder des Kraftstoffdrucks (pist), und von dem Schließverzugszeit-Adaptionswert (t2adap), der Schließverzugszeit-Korrekturwert (Δt2) ermittelt wird.

7. Verfahren nach Anspruch 6, **dadurch gekennzeichnet, dass** der Schließverzugszeit-Korrekturwert (Δt2) mittels eines dritten, vorzugsweise adaptiven, Kennfelds (KF3), ermittelt wird, wobei dem dritten Kennfeld (KF3) eingangsseitig die Betriebsgrößen der Brennkraftmaschine, insbesondere die Sollmenge (Qsoll) und/oder der Kraftstoffdruck (pist), zugeführt werden, und wobei das dritte Kennfeld (KF3) in Abhängigkeit des Schließverzugszeit-Adaptionswerts (t2adap), modifiziert wird.

8. Verfahren nach einem der vorstehenden Ansprüche, **dadurch gekennzeichnet, dass** a) die Ermittlung der tatsächlichen Schließverzugszeit (t2ist) und/oder b) die Bildung des Schließverzugszeit -Korrekturwerts (Δt2) periodisch und/oder bei Vorliegen mindestens einer vorgebbaren Freigabebedingung erfolgt.

9. Verfahren nach einem der Ansprüche 5 bis 8, **dadurch gekennzeichnet, dass** der Schließverzugszeit-Korrekturwert (Δt2) von der unkorrigierten Ansteuerdauer (ET*) subtrahiert wird.

10. Steuergerät (200) zum Betreiben eines mittels eines Aktors (102, 104) betätigten Ventils (100), insbesondere eines Einspritzventils (100) einer Brennkraftmaschine eines Kraftfahrzeugs, bei dem der Aktor (102, 104) mit einem eine gewünschte Öffnungsdauer (Top*) des Ventils (100) charakterisierenden Ansteuersignal (I) ansteuerbar ist, dass das die gewünschte Öffnungsdauer (Top*) charakterisierende Ansteuersignal (I) in Abhängigkeit von einer Ventilverzugszeit (t11, t2) korrigierbar ist, um ein korrigiertes Ansteuersignal (Ikorr) zur Ansteuerung des Aktors (102, 104) zu erhalten, wobei die Ventilverzugszeit (t11, t2) eine zeitliche Abweichung zwischen dem Ansteuersignal (I) und einer tatsächlichen Änderung eines Betriebszustands mindestens einer Komponente des Ventils (100), insbesondere einer Ventilnadel (116), **dadurch gekennzeichnet, dass** es zur Ausführung des Verfahrens nach einem der Ansprüche 1 bis 9 ausgebildet ist.

11. Computerprogramm mit Programmcodemitteln, um alle Schritte des Verfahrens nach einem der Ansprüche 1 bis 9 durchzuführen, wenn das Computerprogramm auf einem Computer oder einer entsprechenden Recheneinheit, insbesondere in einem Steuergerät (200) gemäß Anspruch 10, ausgeführt wird.

12. Computerprogrammprodukt mit Programmcodemitteln, die auf einem computerlesbaren Datenträger gespeichert sind, um alle Schritte des Verfahrens nach einem der Ansprüche 1 bis 9 durchzuführen, wenn das Computerprogramm auf einem Computer oder einer entsprechenden Recheneinheit, insbesondere in einem Steuergerät (200) gemäß Anspruch 10, ausgeführt wird.

## Claims

1. Method for operating a valve (100) which is operated by means of an actuator (102, 104), in particular an injection valve (100) of an internal combustion engine of a motor vehicle, in which method the actuator (102, 104) is driven by a drive signal (I) which characterizes a desired opening duration (Top*) of the valve (100), that the drive signal (I) which characterizes the desired opening duration (Top*) is corrected depending on a valve delay time (t11, t2) in order to obtain a corrected drive signal (Icorr) for driving the actuator (102, 104), wherein the valve delay time (t11, t2) represents a time difference between the drive signal (I) and an actual change in an operating state of at least one component of the valve (100), in particular a valve needle (116), **characterized in that** an uncorrected drive duration (ET*) is ascertained depending on operating variables of the internal combustion engine, and **in that** the uncorrected drive duration (ET*) is corrected by means of a closing delay time correction value (Δt2) which is ascertained depending on an actual closing delay time (t2act), **in that** a setpoint closing delay time (t2*) is ascertained depending on operating variables of the internal combustion engine, **in that** a closing delay time adaptation value (t2adap) is ascertained depending on a difference between the actual closing delay time (t2act) and the setpoint closing delay time (t2*), and **in that** the closing delay time correction value (Δt2) is ascertained depending on operating variables of the internal combustion engine and on the closing delay time adaptation value (t2adap).

2. Method according to Claim 1, **characterized in that** the drive signal (I) is corrected depending on an actual closing delay time (t2act) of the valve (100), which closing delay time is ascertained in particular by measurement and/or in a model-based manner and corresponds to a time difference between an end (tET1) of the drive duration (ET) defined by the drive signal (I) and an actual closing time (ts).

3. Method according to Claim 2, **characterized in that** rebounding of a valve needle (116) and/or any other valve element (104) of the valve (100) is taken into account when ascertaining the actual closing delay time (t2act).

4. Method according to one of the preceding claims, **characterized in that** the drive signal (I) is corrected depending on an actual opening delay time (t11) of the valve (100), which opening delay time is ascertained in particular by measurement and/or in a model-based manner and corresponds to a time difference between a beginning (tET0) of the drive duration (ET) defined by the drive signal (I) and an actual opening time (topen).

5. Method according to one of the preceding claims, **characterized in that** an uncorrected drive duration (ET*) is ascertained, preferably by means of a first characteristic map (KF1), depending on operating variables of the internal combustion engine, in particular depending on a setpoint quantity (Qset) to be injected by the valve (100) and/or a fuel pressure (pact), and **in that** the uncorrected drive duration (ET*) is corrected by means of a closing delay time correction value (Δt2) which is ascertained depending on the actual closing delay time (t2).

6. Method according to Claim 5, **characterized in that** a setpoint closing delay time (t2*) is ascertained, preferably by means of a second characteristic map (KF2), depending on operating variables of the internal combustion engine, in particular depending on a setpoint quantity (Qset) to be injected by the valve (100) and/or depending on a fuel pressure (pact), **in that** a closing delay time adaptation value (t2adap) is ascertained depending on a difference between the actual closing delay time (t2act) and the setpoint closing delay time (t2*), and **in that** the closing delay time correction value (Δt2) is ascertained depending on operating variables of the internal combustion engine, in particular depending on the setpoint quantity (Qset) and/or the fuel pressure (pact), and on the closing delay time adaptation value (t2adap).

7. Method according to Claim 6, **characterized in that** the closing delay time correction value (Δt2) is ascertained by means of a third, preferably adaptive, characteristic map (KF3), wherein the operating variables of the internal combustion engine, in particular the setpoint quantity (Qset) and/or the fuel pressure (pact), are supplied to the third characteristic map (KF3) at the input end, and wherein the third characteristic map (KF3) is modified depending on the closing delay time adaptation value (t2adap).

8. Method according to one of the preceding claims, **characterized in that** a) ascertaining the actual closing delay time (t2act) and/or b) forming the closing delay time correction value (Δt2) are performed periodically and/or when at least one prespecifiable enabling condition is present.

9. Method according to one of Claims 5 to 8, **characterized in that** the closing delay time correction value (Δt2) is subtracted from the uncorrected drive duration (ET*).

10. Controller (200) for operating a valve (100) which is operated by means of an actuator (102, 104), in particular an injection valve (100) of an internal combustion engine of a motor vehicle, in which controller the actuator (102, 104) can be driven by a drive signal (I) which characterizes a desired opening duration (Top*) of the valve (100), that the drive signal (I) which characterizes the desired opening duration (Top*) can be corrected depending on a valve delay time (t11, t2) in order to obtain a corrected drive signal (Icorr) for driving the actuator (102, 104), wherein the valve delay time (t11, t2) a time difference between the drive signal (I) and an actual change in an operating state of at least one component of the valve (100), in particular a valve needle (116), **characterized in that** the said controller is designed to execute the method according to one of Claims 1 to 9.

11. Computer program having program code means in order to carry out all of the steps of the method according to one of Claims 1 to 9 when the computer program is run on a computer or a corresponding computer unit, in particular in a controller (200) according to Claim 10.

12. Computer program product having program code means which are stored in a computer-readable data carrier in order to carry out all of the steps of the method according to one of Claims 1 to 9 when the computer program is run on a computer or a corresponding computer unit, in particular in a controller (200) according to Claim 10.

## Revendications

1. Procédé destiné au fonctionnement d'une soupape (100) actionnée au moyen d'un actionneur (102, 104), en particulier au fonctionnement d'une soupape d'injection (100) d'un moteur à combustion interne d'un véhicule à moteur, pour lequel l'actionneur (102, 104) est commandé au moyen d'un signal de commande (I) qui caractérise une durée d'ouverture souhaitée (Top*) de la soupape (100), que
la durée d'ouverture souhaitée (Top*) qui caractérise le signal de commande (I) est corrigée en fonction d'un temps de retard de la soupape (t11, t2), en vue de
recevoir un signal de commande (Ikorr) corrigé qui est destiné à la commande de l'actionneur (102, 104) ; selon lequel le temps de retard de la soupape (t11, t2) représente un écart temporel entre le signal de commande (I) et une modification effective d'un état de fonctionnement d'au moins un composant de la soupape (100), en particulier d'une aiguille de soupape (116) ; **caractérisé en ce que**
une durée de commande non corrigée (ET*) est déterminée en fonction de grandeurs de fonctionnement du moteur à combustion interne ; et
**caractérisé en ce que**
la durée de commande non corrigée (ET*) est corrigée au moyen d'une valeur de correction d'un temps de retard de fermeture (Δt2), laquelle est déterminée en fonction d'un temps de retard effectif de fermeture (t2ist) ; **caractérisé en ce que**
un temps de retard de fermeture nominal (t2*) est déterminé en fonction de grandeurs de fonctionnement du moteur à combustion interne ;
**caractérisé en ce que**
une valeur d'adaptation du temps de retard de fermeture (t2adap) est déterminée en fonction d'un écart entre le temps de retard de fermeture effectif (t2ist) et le temps de retard de fermeture nominal (t2*) ; et
**caractérisé en ce que**
la valeur de correction du temps de retard de fermeture (Δt2) est déterminée en fonction de grandeurs de fonctionnement du moteur à combustion interne, ainsi qu'en fonction de la valeur d'adaptation du temps de retard de fermeture (t2adap).

2. Procédé selon la revendication 1, **caractérisé en ce que** le signal de commande (I) est corrigé en fonction d'un temps de retard de fermeture effectif (t2ist) de la soupape (100), lequel est, en particulier, déterminé sur la base d'une technique de mesure et/ou sur la base d'un modèle, et lequel correspond à une différence de temps entre une fin (tET1) de la durée de commande (ET) définie par le signal de commande (I) et un moment de fermeture effectif (ts).

3. Procédé selon la revendication 2, **caractérisé en ce qu'**un contre-coup d'une aiguille de soupape (116) et/ou d'un autre élément de soupape (104) de la soupape (100) est pris en compte lors de la détermination du temps de retard de fermeture effectif (t2ist).

4. Procédé selon l'une des revendications ci-dessus, **caractérisé en ce que** le signal de commande (I) est corrigé en fonction d'un temps de retard de l'ouverture effectif (t11) de la soupape (100), lequel est, en particulier, déterminé sur la base d'une technique de mesure et/ou sur la base d'un modèle, et lequel correspond à une différence de temps entre un début (tET0) de la durée de commande (ET) définie par le signal de commande (I) et un moment d'ouverture effectif (töff).

5. Procédé selon l'une des revendications ci-dessus, **caractérisé en ce que**
une durée de commande (ET*) non corrigée est déterminée en fonction de grandeurs de fonctionnement du moteur à combustion interne, en particulier en fonction d'une quantité nominale (Qsoll) devant être injectée à travers la soupape (100) et/ou en fonction d'une pression de carburant (pist), de préférence au moyen d'un premier diagramme caractéristique (KF1) ; et
**caractérisé en ce que**
la durée de commande non corrigée (ET*) est corrigée au moyen d'une valeur de correction d'un temps de retard de fermeture (Δt2) qui est déterminée en fonction du temps de retard de fermeture effectif (t2).

6. Procédé selon la revendication 5,
**caractérisé en ce que**
un temps de retard de fermeture nominal (t2*) est déterminé en fonction de grandeurs de fonctionnement du moteur à combustion interne, en particulier en fonction d'une quantité nominale (Qsoll) devant être injectée à travers la soupape (100) et/ou en fonction d'une pression de carburant (pist), de préférence au moyen d'un deuxième diagramme caractéristique (KF2), ;
**caractérisé en ce que**
une valeur d'adaptation du temps de retard de fermeture (t2adap) est déterminée en fonction d'un écart entre le temps de retard de fermeture effectif (t2ist) et le temps de retard de fermeture nominal (t2*) ; et
**caractérisé en ce que**
la valeur de correction du temps de retard de fermeture (Δt2) est déterminée en fonction de grandeurs de fonctionnement du moteur à combustion interne, en particulier en fonction de la quantité nominale (Qsoll) et/ou de la pression de carburant (pist), ainsi qu'en fonction de la valeur d'adaptation du temps de retard de fermeture (t2adap).

7. Procédé selon la revendication 6, **caractérisé en ce que** la valeur de correction du temps de retard de fermeture (Δt2) est déterminée au moyen d'un troisième diagramme caractéristique (KF3), lequel est de préférence adaptatif ;
selon lequel les grandeurs de fonctionnement du moteur à combustion interne, en particulier la quantité nominale (Qsoll) et/ou la pression de carburant (pist), sont ajoutées côté entrée au troisième diagramme caractéristique (KF3) ; et
selon lequel le troisième diagramme caractéristique (KF3) est modifié en fonction de la valeur d'adaptation du temps de retard de fermeture (t2adap).

8. Procédé selon l'une des revendications ci-dessus, **caractérisé en ce que**
a) la détermination du temps de retard de fermeture effectif (t2ist) ; et/ou
b) la formation de la valeur de correction du temps de retard de fermeture (Δt2) est réalisée de manière périodique et/ou en présence d'au moins une condition de déclenchement qui peut être prédéfinie.

9. Procédé selon l'une des revendications 5 à 8, **caractérisé en ce que** la valeur de correction du temps de retard de fermeture (Δt2) est soustraite de la durée de commande non corrigée (ET*).

10. Appareil de commande (200) destiné au fonctionnement d'une soupape (100) actionnée au moyen d'un actionneur (102, 104), en particulier au fonctionnement d'une soupape d'injection (100) d'un moteur à combustion interne d'un véhicule à moteur, pour lequel l'actionneur (102, 104) peut être commandé au moyen d'un signal de commande (I) qui caractérise la durée d'ouverture souhaitée (Top*) de la soupape (100) ;
que
le signal de commande (I) qui caractérise la durée d'ouverture souhaitée (Top*) peut être corrigé en fonction d'un temps de retard de la soupape (t11, t2), en vue de recevoir un signal de commande corrigé (Ikorr) qui est destiné à la commande de l'actionneur (102, 104) ;
selon lequel le temps de retard de la soupape (t11, t2) un écart temporel entre le signal de commande (I) et une modification effective d'un état de fonctionnement d'au moins un composant de la soupape (100), en particulier d'une aiguille de soupape (116) ;
**caractérisé en ce que**
ledit appareil de commande est conçu en vue de la réalisation du procédé selon l'une des revendications 1 à 9.

11. Programme informatique avec des moyens de code de programme en vue de réaliser toutes les phases du procédé selon l'une des revendications 1 à 9, quand ledit programme informatique est exécuté sur un ordinateur ou sur une unité de calcul correspondante, en particulier dans un appareil de commande (200) selon la revendication 10.

12. Produit de programme informatique avec des moyens de code de programme qui sont enregistrés sur un support de données pouvant être lu par un ordinateur, en vue de réaliser toutes les phases du procédé selon l'une des revendications 1 à 9, quand ledit programme informatique est exécuté sur un ordinateur ou sur une unité de calcul correspondante, en particulier dans un appareil de commande (200) selon la revendication 10.
